# EUROPEAN PATENT SPECIFICATION

(11) **EP 1 345 341 B1**
(45) Date of publication and mention of the grant of the patent: **05.03.2008**
(21) Application number: 02026191.3
(22) Date of filing: 25.11.2002
(51) Int. Cl.: H04B 10/10

(54) **Optical transceiver for data transfer and control applications**
Optischer Sender-Empfänger zur Datenübermittlung und Steuerungsanwendungen
Emetteur-récepteur optique pour la commande de transfert des données

(30) Priority: 14.03.2002 SG 200201560
(43) Date of publication of application: 17.09.2003
(73) Proprietor: Avago Technologies ECBU IP (Singapore) Pte. Ltd., Singapore 768923 (SG)
(72) Inventor: Tan, Wee Sin, Singapore 530247 (SG); Basoor, Suresh, Singapore 650312 (SG); Pamidighant, Ramana V., Singapore 560559 (SG)
(74) Representative: Dilg, Haeusler, Schindelmann Patentanwaltsgesellschaft mbH

(56) References cited:
- WO-A-01/33748
- US-A- 6 014 236

## Description

### Field of the Invention

The present invention relates to optical transceiver devices used for data transfer and control applications.

### Background

An infrared (IR) transceiver module typically comprises an IR light emitting diode (LED) operating at 870 nm and a photodiode, packaged together with appropriate supporting circuitry to form a self-contained unit.

Electrical terminals are exposed on the outside of the self-contained unit to enable electrical coupling to external circuitry. To facilitate use of the unit, the light output from the LED illuminates a large area (typically a cone of +/- 15°). Consequently, a user need not precisely align the transmitter and receiver.

By combining various components of an IR transceiver into a single package, the size and form factor of the transceiver can be considerably reduced. Further, the package is typically more durable and may consume less power than equivalent transceivers comprising discrete components. IR transceivers are used extensively in a wide variety of consumer and personal electronic appliances, such as cellular telephones, personal digital assistants and laptop computers. Such appliances typically include an IR transmitting window, which is referred to as a "cosmetic window".

An example of an optical transceiver device is disclosed in US 6 014 236 A. The optical transceiver device disclosed herein includes a pair of transceivers, with each transceiver being housed under two separate lenses, i.e., at least one transmitter and receiver are housed under each lens. In one embodiment, at least one of the transceivers is a dual wavelength transceiver and includes a pair of transmitters. Accordingly, in this embodiment, at least two transmitters and two receivers are housed under a first lens and at least one transmitter and a receiver are housed under a second lens.

Another example of an optical transceiver device is disclosed in JP 2001244498. This optical transceiver includes a remote control receiver under a first lens, an IrDA receiver under a second lens and an IrDA transmitter under a third lens.

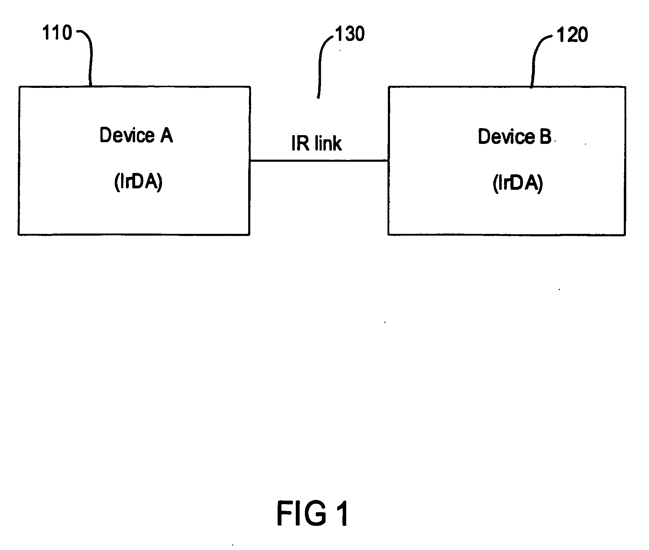

The Infrared Data Association (IrDA) is an industry organization that promotes international standards for hardware and software used in IR communication links. Most IR communications functionality included in consumer and personal appliances conforms with IrDA specifications. Fig. 1 schematically represents an example of two IrDA-compliant devices communicating via an IR link. Device A 110 communicates with device B 120 via IR link 130.

When an IR link communication channel is created between two IR transceiver modules, the LED in the first transceiver optically couples with the photodiode in the second transceiver. Further, the LED in the second transceiver optically couples with the photodiode in the first transceiver. Although IR transceivers using IR frequency bands are commonly used, other frequency bands can also be used. The IR transceiver module is deeply mounted on an end portion of a main printed circuit board (PCB). This transceiver module comprises a main body having a moulded lens shape over the LED and the photodiode.

### Summary

An optical transceiver device is described herein for combining the functions of IrDa-compliant infrared transceivers and remote control devices. A receiver of the transceiver allows the remote control facilities of the transceiver to encompass bi-directional remote control capabilities.

The described optical transceiver includes an IR transmitter, operating around a first frequency band, that transforms electric signals into transmitted optical signals in IrDA-compliant infrared communications; a remote control transmitter, operating around a second frequency band different from said first frequency band, that transforms electrical signals into transmitted optical signals in remote control applications; and an IR receiver, operating around the first frequency band, that transforms into electric signals optical signals received in the first frequency band in IrDA-compliant infrared communications. The IR transmitter and the remote control transmitter can independently transmit data, and the receiver can receive data from a corresponding IR transmitter operating in said first frequency band. The optical device is characterized in that said IR transmitter and said remote control transmitter are housed within a same emitter lens to achieve a desired viewing angle; and only said IR receiver is housed within a separate receiver lens.

It is to be noted that hereon in, the IR transmitter and the remote control transmitter are referred to as the first and second transmitters, respectively, while the IR receiver is referred to as the first receiver.

The first transmitter can be used for IrDA-compliant infrared communications, and the second transmitter can be used for remote control applications. For instance, the first frequency band may be approximately 805 nm to 900nm, and the second frequency band is approximately 915 nm to 965 nm. The receiver may not be particularly selective and, as a result, is able to detect remote control signals transmitted in the second frequency band.

The first transmitter and the second transmitter preferably include respective light emitting diodes, which are both within a transmitter lens to achieve a desired viewing angle. The receiver may then comprise a photodiode. The first transmitter and the second transmitter are usefully formed on a single integrated circuit.

### Description of Drawings

Fig. 1 is a schematic representation of infrared communication between two devices.
Fig. 2 is a schematic representation of an example of a communication protocol for remote control communication.
Fig. 3 is a schematic representation of a side view of a housing for an optical transceiver described herein.
Fig. 4 is a schematic representation of the housing of Fig. 3, as viewed from above.
Fig. 5 is an electrical circuit schematic representation of circuitry for an optical transceiver described herein, housed in the housing of Figs. 3 and 4.
Fig. 6 is an electrical circuit schematic representation of switching circuitry external to the configuration represented in Fig. 5.

### Detailed Description

An optical transceiver that combines functionality for IrDA-compliant infrared communications and remote control infrared communications is described herein. An overview of remote control communications is provided, followed by a comparison of infrared and remote control communications. The hybrid optical transceiver that combines these respective facilities is then described in detail, together with possible applications for this hybrid transceiver.

### Remote control transmitter

A remote control transmitter comprises an IR LED (operating at 940 nm), which is electrically connected to a switching transistor and a battery supply. When a key is pressed on a handheld remote control unit, a predetermined pulse pattern is generated. This pulse pattern is activated by a transistor, and the LED is consequently activated. An IR signal from the LED is received by a remote control receiver (in, for example, an appliance), and the encoded function communicated by the pulsed pattern is decoded.

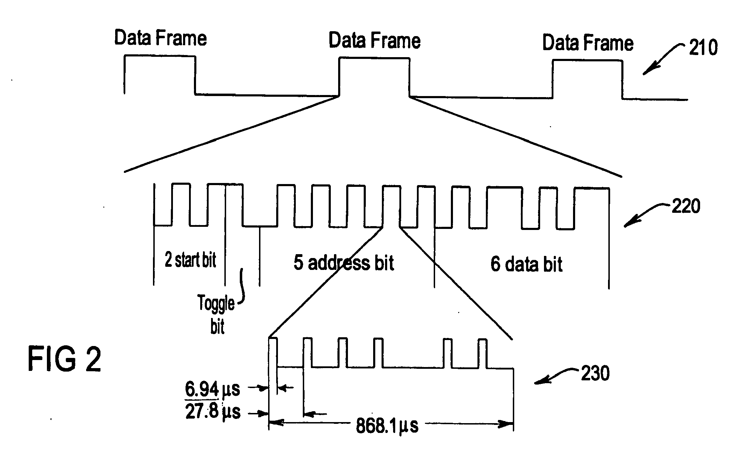

Communication using remote control devices is uni-directional. There is no common standard for remote control coding. RC5 code is one remote control code. Fig. 2 schematically represents a modulation scheme used by RC5 codes. A remote control signal generated using RC5 comprises a series of data frames 210. Each data frame 210 comprises a command word 220 consisting of 14 bits. The structure of this command word 220 is indicated in Fig. 2. Each bit 230 comprises 32 pulses at a frequency of 36 kHz.

Many remote receivers have a relatively narrow spectral reception band centred around 940 nm. Such receivers are not able to receive IR emission from IrDA-compliant transceivers operating at 870 nm reliably.

### Comparison of remote control and IrDA specifications

Table 1 below tabulates, in comparative form, the difference between various parameters of typical remote control systems, and IrDA-compliant systems.

**TABLE 1**

| | Remote Control | IrDA |
|---|---|---|
| Wavelength (nm) | 915-965 | 805-900 |
| Transmission | Unidirectional | Bi-directional |
| Frame format | Proprietory for each vendor | Defined by IrDA |

| Modulation | Bi-Phase, Pulse length, and Pulse Distance | RZI, 3-16 duration |
|---|---|---|
| Receiver sensitivity | 0.05 µW/cm² | 4µW/cm² |
| Link Distance | 8m (typical) | 1 m |
| Transmit Angle | +/- 20° | +/- 15° |
| Carrier Frequency | 30-60 khz | |
| Receiver bandwidth | Carrier Freq +/- 2kHz | Wide bandwidth |
| Data Rate | 2000-4000bps | 2.4bps-16Mbps |

These two IR schemes are relatively similar, though these schemes are not compatible with each other and consequently cannot inter-operate.

### Hybrid transceiver

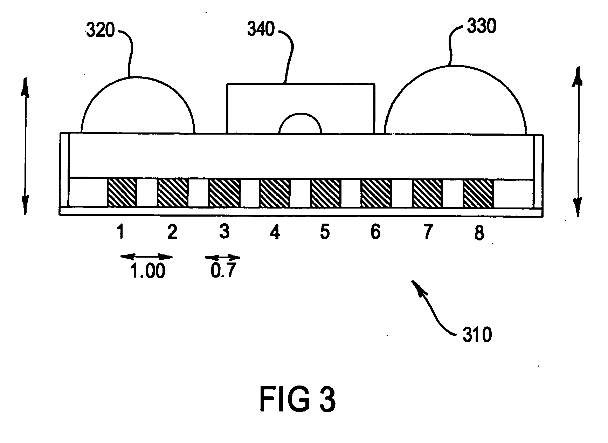

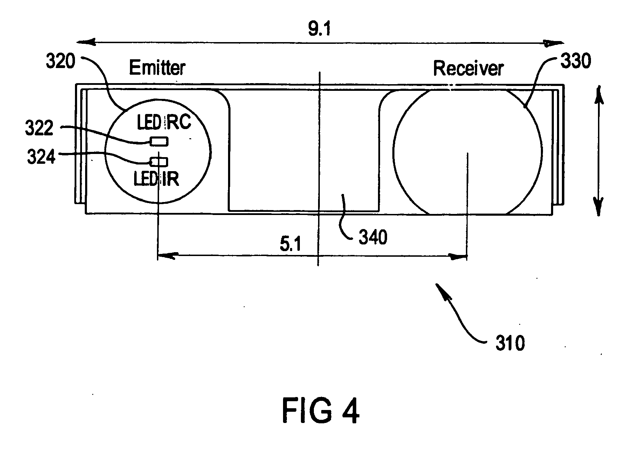

Fig. 3 schematically represents a side view of an IR transceiver package 310, in which the described hybrid transceiver can be housed. Fig. 4 schematically represents the same package from above. With reference to Figs. 3 and 4, emitter 320 and receiver 330 are provided at either end of the package 310, with a shield 340 separating the emitter lens 320 and the receiver lens 330. The emitter 320 houses not only an IR LED (840 nm) 324 but also a remote control LED (940 nm) 322. The profile of the emitter lens 320 is not modified to accommodate the remote control LED.

The two LEDs 322, 324 are accurately positioned with respect to the optical axis of the emitter lens 320, to achieve a suitable viewing angle at a receiver.

The electrical circuit supporting the two transmitters is configured so that the operating current through each LED 322, 324 is appropriate. This configuration assists in producing a relatively low-power IrDA transceiver and a standard remote control transmitter. Each package of the designed component also includes sufficient heat sink material around the two LEDs 322, 324 to achieve sufficient thermal dissipation.

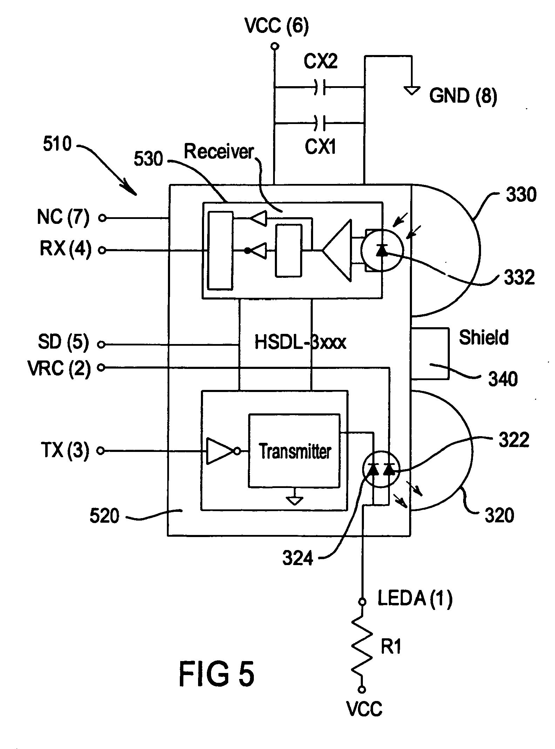

Fig. 5 schematically represents electrical circuitry 510 supporting the two transmitters incorporated in the package 310 of Figs. 3 and 4. This circuitry 510 is based upon a HSDL 3000 Stargate platform, which is selected for a lower idle current specification, and as this component is qualified at a relatively high operating current. The transceiver circuitry 510 comprises transmitter circuitry 520 and receiver circuitry 530, which respectively support the operation of the two transmitter LEDs 322, 324 and the receiver photodiode 332.

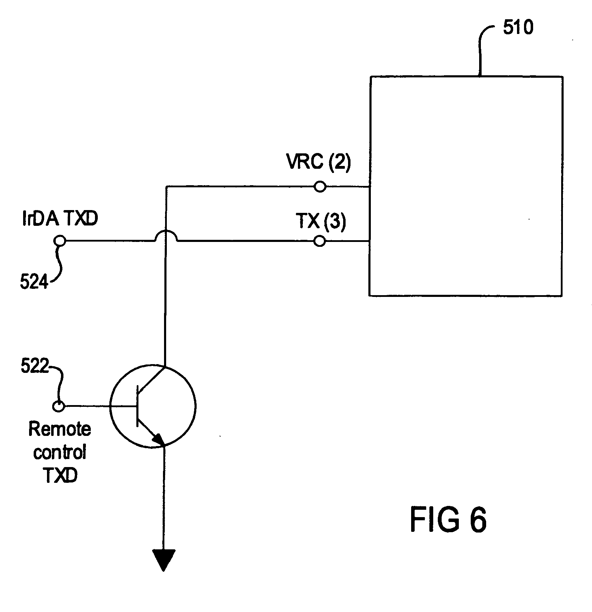

Fig. 6 schematically represents switching circuitry external to the transceiver circuitry 510 of Fig. 5. Independent inputs 522, 524 are provided for respective transmitting LEDs 322, 324. The advantages of this represented configuration are that (i) data can be transmitted using one or both LEDs 322, 324, and (ii) operating currents can be independently configured for each LED 322, 324.

### Applications

The described hybrid transceiver is suited to remote control transmission in a bi-directional mode. For example, a user can activate an appliance from an held-hand remote control, and the appliance transmits back to the held hand remote control a menu of possible selections to the user. Examples of such selections include temperature and humidity settings from an air conditioner, a song list from a compact disc player, lighting controls from a multimedia device. The user can select an desired choice from the menu, and then transmits this selection to the appliance.

In this case, the receiver circuitry of the IrDA receiver is used to receive and interpret data from the remotely controlled appliance. The IrDA receiver is not particularly selective, and can interpret remote control frequency signals centred around 940 nm.

A particular advantage of using an IrDA transceiver for bi-directional remote control is that the transceiver receiver circuitry follows a similar logic to that required for bi-directional remote control functionality. The presence of light provides a "low" signal output and the absence of light provides a "high" signal output. Thus, the IR transmitter can provide a digitized output by receiving a remote control bit pattern, which obviates the need for an external digitizer. The IrDA transceiver also incorporates ambient light filtering, which is also suitable for receiving a remote control data signal.

Various exemplary relative measurements and circuitry are shown in the representations. These are exemplary and not limiting on the broadest aspect of the invention.

Various alterations and modifications can be made to the arrangements and techniques described herein, as would be apparent to one skilled in the relevant art.

## Claims

1. An optical transceiver device (310), comprising:
an IR transmitter (324), operating around a first frequency band, that transforms electric signals into transmitted optical signals in IrDA-compliant infrared communications;
a remote control transmitter (322), operating around a second frequency band different from said first frequency band, that transforms electrical signals into transmitted optical signals in remote control applications; and
an IR receiver (332), operating around the first frequency band, that transforms into electric signals optical signals received in the first frequency band in IrDA-compliant infrared communications;
wherein the IR transmitter (324) and the remote control transmitter (322) can independently transmit data, and the receiver (332) can receive data from a corresponding IR transmitter operating in said first frequency band,
**characterized in that**
said IR transmitter (324) and said remote control transmitter (322) are housed within a common emitter lens (320) to achieve a desired viewing angle; and
only said IR receiver (332) is housed within a separate receiver lens (330).

2. The transceiver device (310,) as claimed in claim 1, wherein the IR transmitter (324) and the remote control transmitter (322) comprise respective light emitting diodes (324, 322).

3. The transceiver device (310) as claimed in claim 1 or 2, wherein the IR transmitter (324) and the remote control transmitter (322) are formed on a single integrated circuit.

4. The transceiver device (310,) as claimed in any one of the preceding claims, further comprising transmitter circuitry (520) for supplying a modulated electrical signal to the IR transmitter.

5. The transceiver device (310) as claimed in any one of the preceding claims, wherein the IR receiver (332,) comprises a photodiode (332).

6. The transceiver device (310) as claimed in any one of the preceding claims, wherein the first frequency band is approximately 805 nm to 900nm, and the second frequency band is approximately 915 nm to 965 nm.

7. The transceiver device (310) as claimed in any one of the preceding claims, further comprising a shield (340) between said transmitter lens (320) and said receiver lens (330).

8. The transceiver device (310) as claimed in any one of the preceding claims, wherein the IR receiver (332) is further operable to receive signals in the second frequency band and transform them into electrical signals.

## Patentansprüche

1. Optische Transceiver-Vorrichtung (310), aufweisend:
- einen IR-Sender (324), der im Bereich eines ersten Frequenzbandes operiert und bei IrDA-konformen Infrarotverbindungen elektrische Signale in gesendete optische Signale umwandelt;
- einen Fernsteuerungssender (322), der im Bereich eines zweiten Frequenzbandes operiert, das sich von dem ersten Frequenzband unterscheidet, und der bei Fernsteuerungsanwendungen elektrische Signale in gesendete optische Signale umwandelt; und
- einen IR-Empfänger (332), der im Bereich des ersten Frequenzbandes operiert und bei IrDA-konformen Infrarotverbindungen in dem ersten Frequenzband empfangene optische Signale in elektrische Signale umwandelt;
- wobei der IR-Sender (324) und der Fernsteuerungssender (322) Daten unabhängig senden können, und der Empfänger (332) Daten von einem entsprechenden IR-Sender empfangen kann, der in dem ersten Frequenzband operiert,
**dadurch gekennzeichnet, dass**
der IR-Sender (324) und der Fernsteuerungssender (322) in einer gemeinsamen Emitterlinse (320) untergebracht sind, um einen gewünschten Betrachtungswinkel zu erzielen; und
nur der IR-Empfänger (332) in einer getrennten Empfängerlinse (330) untergebracht ist.

2. Transceiver-Vorrichtung (310) nach Anspruch 1, wobei der IR-Sender (324) und der Fernsteuerungssender (322) jeweilige Leuchtdioden (324, 322) aufweisen.

3. Transceiver-Vorrichtung (310) nach Anspruch 1 oder 2, wobei der IR-Sender (324) und der Fernsteuerungssender (322) auf einer einzigen integrierten Schaltung gebildet werden.

4. Transceiver-Vorrichtung (310) nach einem der vorhergehenden Ansprüche, ferner aufweisend Senderschaltungen (520), um dem IR-Sender ein moduliertes elektrisches Signal zu liefern.

5. Transceiver-Vorrichtung (310) nach einem der vorhergehenden Ansprüche, wobei der IR-Empfänger (332) eine Photodiode (332) aufweist.

6. Transceiver-Vorrichtung (310) nach einem der vorhergehenden Ansprüche, wobei das erste Frequenzband ungefähr von 805 nm bis 900 nm und das zweite Frequenzband ungefähr von 915 nm bis 965 nm geht.

7. Transceiver-Vorrichtung (310) nach einem der vorhergehenden Ansprüche, ferner aufweisend einen Schirm (340) zwischen der Senderlinse (320) und der Empfängerlinse (330).

8. Transceiver-Vorrichtung (310) nach einem der vorhergehenden Ansprüche, wobei der IR-Empfänger ferner betriebsfähig ist, um Signale in dem zweiten Frequenzband zu empfangen und sie in elektrische Signale umzuwandeln.

## Revendications

1. Émetteur/récepteur optique (310), comprenant :
■ un émetteur IR (324), fonctionnant autour d'une première bande de fréquences, qui transforme des signaux électriques en signaux optiques transmis lors de communications infrarouges conformes à l'IrDA ;
■ un émetteur de commande à distance (322), fonctionnant autour d'une seconde bande de fréquences différente de ladite première bande de fréquences, qui transforme des signaux électriques en signaux optiques transmis dans des applications de commande à distance ; et
■ un récepteur IR (332), fonctionnant autour de la première bande de fréquences, qui transforme en signaux électriques des signaux optiques reçus dans la première bande de fréquences lors de communications infrarouges conformes à l'IrDA ;
dans lequel l'émetteur IR (324) et l'émetteur de commande à distance (322) peuvent transmettre indépendamment des données, et le récepteur (332) peut recevoir des données de la part d'un émetteur IR correspondant fonctionnant dans ladite première bande de fréquences,
**caractérisé en ce que**
ledit émetteur IR (324) et ledit émetteur de commande à distance (322) sont logés dans une lentille d'émetteur commune (320) afin d'obtenir un angle de vision souhaité ; et
seul ledit récepteur IR (332) est logé dans une lentille de récepteur séparée (330).

2. Émetteur/récepteur (310) selon la revendica-tion 1, dans lequel l'émetteur IR (324) et l'émetteur de commande à distance (322) compren-nent des diodes électroluminescentes respectives (324, 322).

3. Émetteur/récepteur (310) selon la revendica-tion 1 ou 2, dans lequel l'émetteur IR (324) et l'émetteur de commande à distance (322) sont formés sur un seul circuit intégré.

4. Émetteur/récepteur (310) selon l'une quel-conque des revendications précédentes, comprenant en outre des circuits émetteurs (520) destinés à fournir un signal électrique modulé à l'émetteur IR.

5. Émetteur/récepteur (310) selon l'une quel-conque des revendications précédentes, dans lequel le récepteur IR (332) comprend une photo-diode (332).

6. Émetteur/récepteur (310) selon l'une quel-conque des revendications précédentes, dans lequel la première bande de fréquences est d'environ 805 nm à 900 nm et la seconde bande de fréquences est d'environ 915 nm à 965 nm.

7. Émetteur/récepteur (310) selon l'une quel-conque des revendications précédentes, compre-nant en outre un écran (340) entre ladite lentille d'émetteur (320) et ladite lentille de récepteur (330).

8. Émetteur/récepteur (310) selon l'une quel-conque des revendications précédentes, dans lequel le récepteur IR (332) est en outre capable de recevoir des signaux dans la seconde bande de fréquences et de les transformer en signaux électriques.
